# EUROPEAN PATENT APPLICATION

(11) **EP 3 181 023 A1**
(43) Date of publication of application: **21.06.2017**
(21) Application number: 16203617.2
(22) Date of filing: 13.12.2016
(51) Int. Cl.: A47J 42/02, A47J 42/08, A47J 42/10, A47J 42/38

(54) **GRINDING DEVICE**

(30) Priority: 16.12.2015 IT UB20159193
(71) Applicant: Plast Emilia S.r.l., 42011 Bangnolo in Piano (RE (IT)
(72) Inventor: CATELLANI, Alberto, I-42017 NOVELLARA (RE) (IT)
(74) Representative: Corradini, Corrado

(57) **Abstract**

Herein described is a grinding device (100) comprising: a stator part (105) comprising a grinding cavity (200); and a rotor part (110) rotatably coupled to the stator part (105) according to a rotation axis (A) coinciding with a central axis (B) of said grinding cavity (200) and comprising a grinding body (280) axially inserted into said grinding cavity (200); wherein the stator part (105) comprises: an external shell (115) provided with means for connecting to the mouth (905) of a container (900), and an internal bushing (195) defining the grinding cavity (200), which is obtained in a separate body with respect to the external shell (115) and it is coupled to the external shell (115) by means of a connection which mutually constrains them at least in rotation.

## Description

### FIELD OF THE ART

The present invention regards a device for grinding food products in grains such as for example pepper, salt, coffee, chocolate or other spices. More in particular, the invention regards a grinding device designated to be associated to the mouth of a disposable container, typically a glass or transparent plastic jar, in which the product to be ground is packaged and sold.

### PRIOR ART

The grinding devices currently used for this type of applications generally comprise a stator part suitable to be applied in a fixed position to the mouth of the container and a rotor part suitable to rotate with respect to the stator part through a manual action of a user.

The stator part comprises a grinding cavity, substantially shaped like a cylindrical duct, which is arranged coaxially to the mouth of the container and whose inner surface is roughened by a plurality of teeth or ribs having sharp-pointed edges.

The rotor part comprises a transversal plate, which is suitable to occlude the axial end of the grinding cavity and it is provided with a plurality of outlet openings for the passage of the ground product, and a generally conical-shaped grinding body, which centrally derives from the transversal plate so as to be axially inserted into the grinding cavity and whose outer surface is roughened by a corresponding plurality of teeth or ribs with sharp-pointed edges.

The inner surface of the grinding cavity and the outer surface of the grinding body are not at direct contact, but they are separated from each other by a narrow annular interspace on which the outlet openings obtained in the transversal plate project.

Thus, the product to be ground that is positioned in the interspace is withheld between the teeth of the grinding cavity and the grinding body and it may be efficiently ground, by simply rotating the two parts one with respect to the other.

However, for this to occur, it is necessary that the grinding cavity and the grinding body be made of a rather hard and rigid material, for example Acetal Resin (POM), which can be easily machined to obtain the required teeth and can also resist to the frictions generated during the grinding.

As a disadvantage, this type of material is rather expensive and thus considerably impacts the costs for producing the grinding device which, being conceived as a disposable device, must be obtained in the least expensive manner possible.

### SUMMARY OF THE INVENTION

Thus, an object of the present invention is to provide a solution that enables reducing the costs for producing the grinding device, without jeopardising the functionality and efficiency thereof.

Another object is that of attaining the aforementioned object through a solution that is simple and rational.

These and other objects are attained by the characteristics of the invention, which are outlined in the independent claim 1. The dependent claims outline preferred and/or particularly advantageous aspects of the invention.

In particular, an embodiment of the invention provides a grinding device comprising:
- a stator part comprising a grinding cavity,
- a rotor part rotatably coupled to the stator part according to a rotation axis coinciding with a central axis of said grinding cavity and comprising a grinding body axially inserted into said grinding cavity,
   wherein the stator part comprises:
   - an external shell provided with means for connecting to the mouth of a container, and
   - an internal bushing defining the grinding cavity, which is obtained in a separate body with respect to the external shell and is coupled to the external shell by means of a connection which reciprocally constrains them at least in rotation.

Thanks to this solution, the bushing that defines the grinding cavity may be the only component of the stator part that is made of hard and rigid material, reducing the use of such material to the minimum and thus the costs of producing the grinding device.

According to an aspect of the invention, the connection between the internal bushing and the external shell may comprise:
- a grooved ring made in a single body with the internal bushing and extending about a central axis coinciding with the rotation axis, and
- a corresponding grooved seat obtained in the external shell and in which the grooved ring is axially inserted to obtain, together with the grooved seat, a prismatic coupling.

This solution represents a simple and efficient method for ensuring that the internal bushing that defines the grinding cavity never rotates with respect to the external shell that is applied to the container.

According to another aspect of the invention, said grooved ring may have an axial extension which is smaller than the axial extension of the internal bushing with respect to which it can radially project towards the external.

This solution enables obtaining the grooved ring in a simple and rational manner.

Another aspect of the invention provides for that the external shell may comprise an annular abutment which delimits an end of said grooved seat and which serves as an axial abutment for the grooved ring.

Thus, it is easy to axially position the internal bushing with respect to the external shell.

Another aspect of the invention provides for that the external shell may comprise at least one notch which projects radially within the perimeter of the grooved seat, axially blocking the grooved ring against the annular abutment. This enables efficiently preventing the internal bushing from axially slipping off from the external shell.

According to a further aspect of the invention, the grooved ring may comprise at least one radial appendage which projects radially from one of the teeth of the grooved ring and which is engaged in a corresponding radial recess obtained along one of the grooves of the grooved seat.

Thus, the coupling between the internal bushing and the external shell may be obtained only in a mutual angular predetermined position of these two components.

Another aspect of the invention in particular provides for that the grooved ring may comprise a pair of said radial appendages arranged on diametrically opposite sides with respect to the central axis.

This solution efficiently prevents the plate form inclining inside the external shell before reaching the correct alignment.

According to an aspect of the invention, said grooved seat may be delimited by an annular rib which projects coaxially from the annular abutment and by a plurality of peduncles which project radially from said annular rib towards the central axis.

This solution represents a simple and efficient method for obtaining the grooved seat.

According to another aspect of the invention, the external shell may comprise a plurality of longitudinal ribs which project from the annular rib and extend parallel to the central axis, the longitudinal ribs being distributed about the central axis angularly equally spaced from each other.

These longitudinal ribs serve as an abutment for the edge of the container, make the connection of the latter with the stator part of the grinding device stable.

Furthermore, an aspect of the invention provides for that the longitudinal ribs can be angularly offset with respect to the peduncles of the grooved seat. Thus, the longitudinal ribs do not interfere with the coupling between the grooved seat and the grooved ring of the internal bushing.

Lastly, as previously mentioned, a further aspect of the invention provides for that the internal bushing can be made of different material with respect to the external shell.

In particular, both can be made of plastic material but, while the internal bushing can be made of hard and rigid material, for example Acetal Resin (POM), the external shell can be made of a material having lower mechanical characteristics but less expensive, for example polypropylene (PP), thus reducing the overall costs of the grinding device.

### BRIEF DESCRIPTION OF THE DRAWINGS

Further characteristics and advantages of the invention will be apparent from reading the following description - provided by way of non-limiting example - with reference to the figures illustrated in the attached drawings.

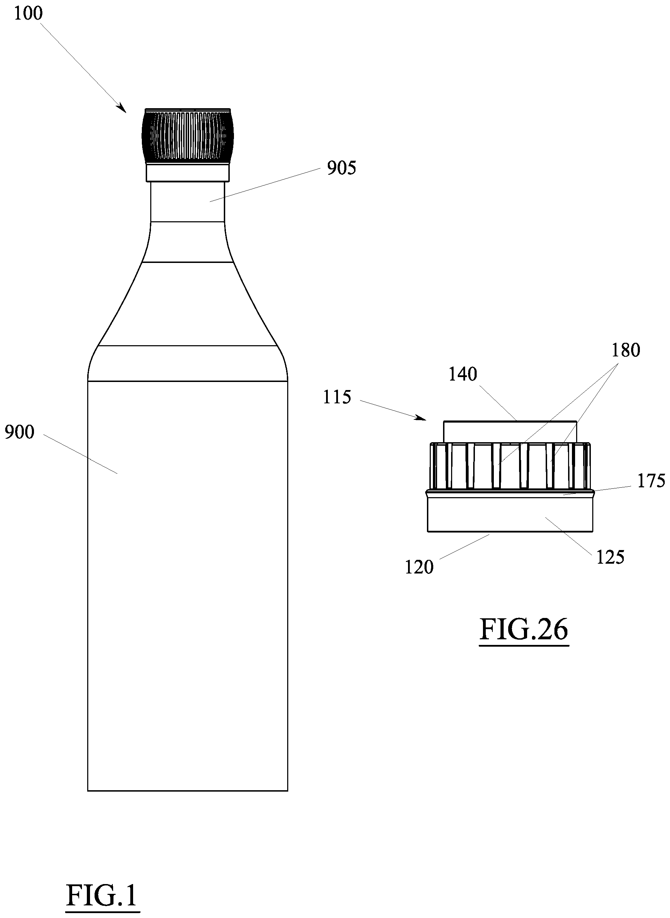

Figure 1 is a lateral view of a container provided with a grinding device according to an embodiment of the present invention.
Figure 2 is a first exploded view of the grinding device of figure 1.
Figure 3 is a second exploded view of the grinding device of figure 1.

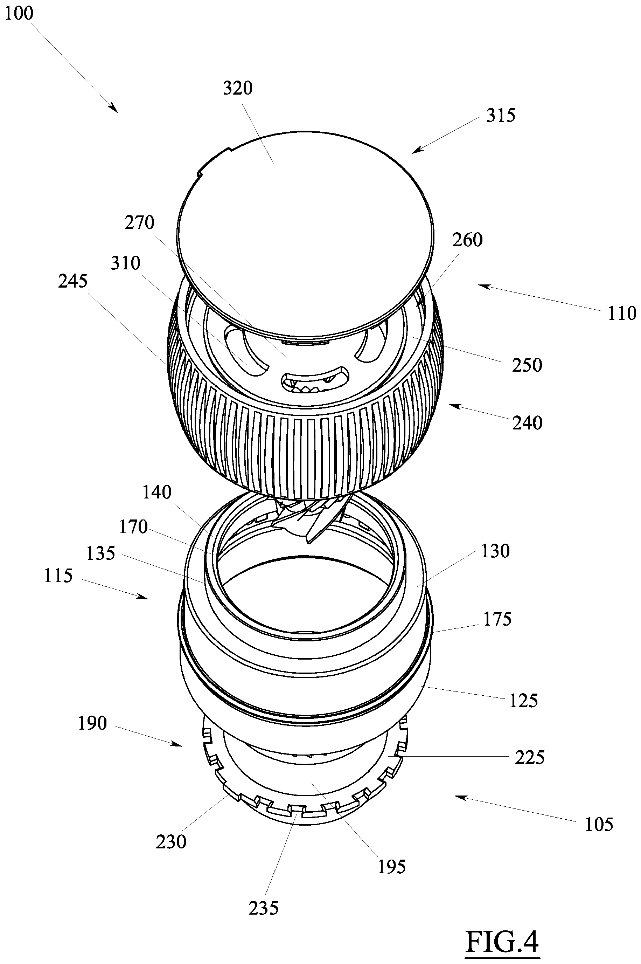

Figure 4 is a third exploded view of the grinding device of figure 1.
Figure 5 is a capsized lateral view of a supporting body of the grinding device of figure 1.
Figure 6 is an orthogonal projection of figure 5.
Figure 7 is section VII-VII of figure 6.
Figure 8 is section VIII-VIII of figure 9.
Figure 9 is a top axial view of a counter-grinder of the grinding device of figure 1.
Figure 10 is the orthogonal projection of figure 9.
Figure 11 is section XI-XI of figure 13.
Figure 12 is a lateral view of the stator part of the grinding device of figure 1 alone.
Figure 13 is section XIII-XIII of figure 12.
figure 14 is a perspective view of the stator part of figure 12.
Figure 15 is a longitudinal section showing the assembly of the stator part on the container.
Figure 16 is a lateral view of a manoeuvre body of the grinding device of figure 1.
Figure 17 is the orthogonal projection of figure 16.
Figure 18 is section XVIII-XVIII of figure 17.
Figure 19 is a lateral view of a grinding body of the grinding device of figure 1.
Figure 20 is section XX-XX of figure 19.
Figure 21 is the orthogonal projection of figure 19.
Figure 22 is a perspective view of the grinding body of figure 19.
Figure 23 is detail XXIII of figure 20.
Figure 24 is detail XXIV of figure 18.
Figure 25 is a longitudinal section of the grinding device of figure 1.
Figure 26 is a lateral view of the supporting body of figure 5 according to an alternative embodiment.

### DETAILED DESCRIPTION

The aforementioned figures show a grinding device, indicated in its entirety with reference number 100, that is mainly used for grinding grain-like food products, such as for example pepper, salt, coffee, chocolate or other spices. The grinding device 100, commonly referred to as grinder cap, is conceived as a disposable device designated to be applied to a disposable container 900, for example a jar made of glass or transparent or opaque plastic, inside which the products to be ground are packaged and sold.

In particular, the grinding device 100 is designated to be applied to an outlet mouth 905 of the aforementioned container 900, which is generally cylindrical-shaped.

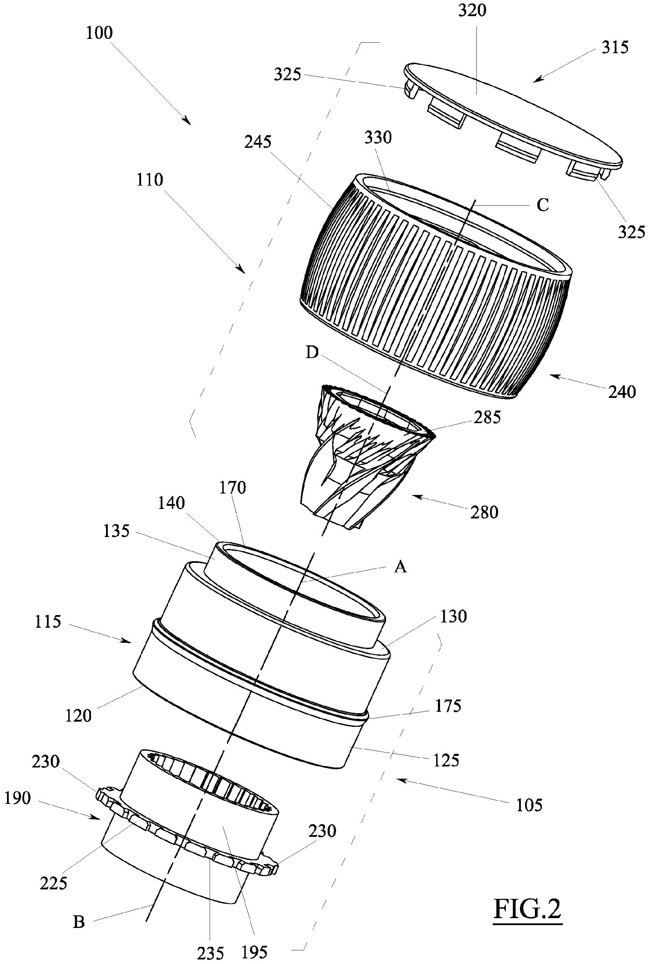

As illustrated in the exploded view of figure 2, the grinding device 100 essentially comprises two mutually moveable parts, one of which is a stator part, generally indicated with 105, and a rotor part, generally indicated with 110. The stator part 105 comprises a monolithic supporting body 115 shaped to form a shell (i.e. a generally internally hollow tubular shape), which extends around a central symmetry axis A and suitable to be coaxially fitted onto the outlet mouth 905 of the container 900.

More in detail, the supporting body 115 comprises a first annular edge 120, through which the outlet mouth 905 of the container 900 may be inserted thereinto.

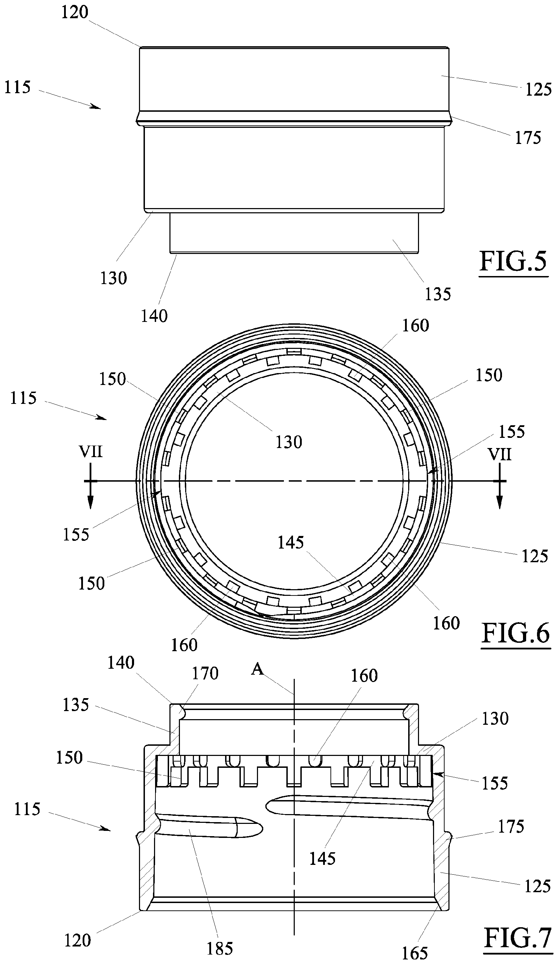

As illustrated in figure 7, the annular edge 120 is defined as the free end of a first cylindrical portion 125 of the supporting body 115, which axially extends from the annular edge 120 up to the annular abutment 130 that radially projects from the inner surface of the supporting body 115 towards the central axis A.

Starting from the annular abutment 130, the supporting body 115 comprises a second cylindrical portion 135, coaxial but having a smaller diameter with respect to the cylindrical portion 125, which ends with a second annular edge 140 which lies on a plane parallel to the lying plane of the opposite annular edge 120.

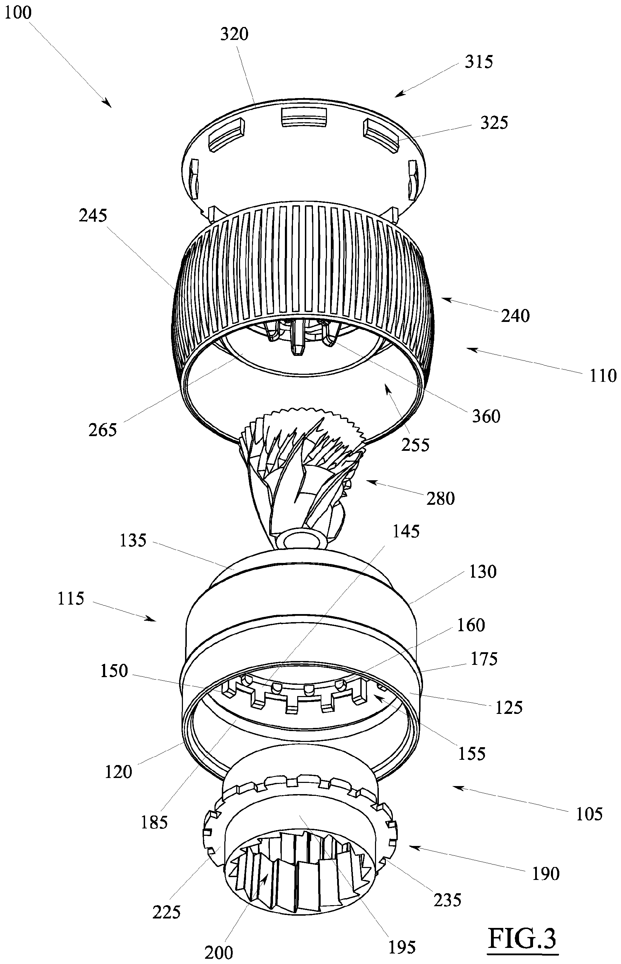

At the annular abutment 130, the supporting body 115 comprises an annular rib 145 arranged coaxially with respect to the cylindrical portion 125 (also see fig. 3).

In particular, the annular rib 145 radially projects from the inner surface of the cylindrical portion 125 towards the central axis A and axially from the annular abutment 130 towards the annular edge 120.

A plurality of distinct longitudinal ribs 150 extending parallel to the central axis A towards the annular edge 120 further derive from the annular rib 145. These longitudinal ribs 150 are distributed on the inner surface of the cylindrical portion 125 so as to be angularly equally spaced from each other with respect to the central axis A.

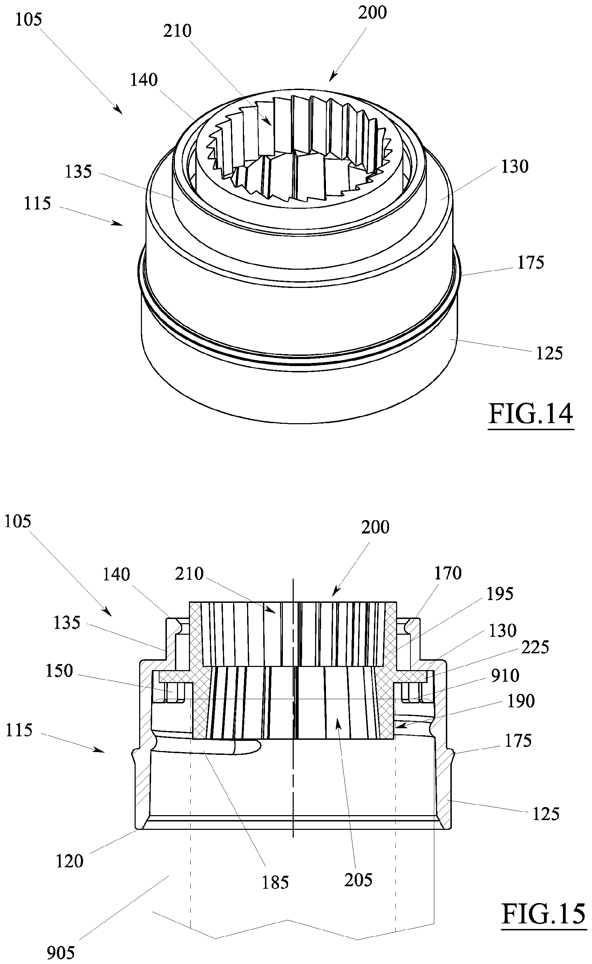

As illustrated in figure 15, the longitudinal ribs 150 serve as an abutment for an upper edge 910 of the outlet mouth 905 of the container 900, so as to centre the supporting body 115 and make the mutual connection more stable.

In the illustrated example, the annular rib 145 is not continuous but interrupted in two diametrically opposite points by an equal number of longitudinal grooves 155 (see figs. 3, 6 and 13), each of which extends between two consecutive longitudinal ribs 150 and ends at the level of the annular abutment 130.

In this manner, the diameter of the inner surface of the supporting body 115, at each of the longitudinal grooves 155, is substantially equal to the diameter of the inner surface of the cylindrical portion 125 (see figs. 6 and 7).

The supporting body 115 further comprises a plurality of distinct peduncles 160 which radially project from the inner surface of the annular rib 145 towards the central axis A and axially from the annular abutment 130 towards the first annular edge 120.

These peduncles 160 are circumferentially distributed around the central axis

A so that each of them is angularly interposed in an equally spaced fashion between two consecutive longitudinal ribs 150, except for the area in which there are two longitudinal ribs 155 and thus in which the peduncles 160 are absent.

Thus, the annular rib 145 and the peduncles 160 inversely define on the annular abutment 130 a grooved seat, where the grooves of said seat are represented by the shape of the peduncles 160 while the teeth are represented by the shape of the portions of the annular rib 145 which are interposed between the peduncles 160.

In this context, the longitudinal grooves 155 may thus be seen as two radial recesses obtained on the bottom of two diametrically opposite grooves of the aforementioned grooved seat.

The peduncles 160 may have a tapered shape in the longitudinal direction, wider at the annular abutment 130 and narrower at the end facing towards the annular edge 120.

At the annular edge 120, the inner surface of the supporting body 115 may comprise a chamfer 165 suitable to facilitate the insertion of the outlet mouth 905 of the container 900.

On the opposite side, at the annular edge 140, the supporting body 115 may comprise an annular rib 170 arranged coaxial to the cylindrical portion 135.

In particular, the annular rib 170 projects from the inner surface of the cylindrical portion 135 and radially projects towards the central axis A, so as to enable the coupling of the stator part 105 to the rotor part 110 as described hereinafter.

The supporting body 115 may also comprise a third annular rib 175 arranged coaxially with respect to the cylindrical portion 125, which radially projects from the outer surface of the cylindrical portion 125 moving away from the central axis A.

Between the annular edge 120 and the annular abutment 130, the supporting body 115 may lastly comprise one or more helical ribs 185 which project from the inner surface of the cylindrical portion 125 and helically extend with respect to the central axis A, so as to define a thread suitable to cooperate with a corresponding thread obtained on the outer surface of the outlet mouth 905, so as to fasten the supporting body 115 to the container 900.

As previously mentioned, this fastening ends when upper edge 910 of the outlet mouth 905 of the container 900 is tightened against the longitudinal ribs 150 (see fig. 15), which thus also serve to prevent - by friction - the opposite rotation and thus the unfastening of the supporting body 115.

In other embodiments, the helical ribs 185 may be replaced by a coaxial annular rib or by a series of circumferentially arranged notches, for example in proximity of the annular edge 120, which are suitable to provide a fitting coupling with respective ribs or notches obtained in the outlet mouth 905 of the container 900.

In these cases, the constraint between the outlet mouth 905 and the supporting body 115 would however exclusively be of the coaxial or almost coaxial type, so that mutual locking in the rotational direction would be obtained by other means to be addressed hereinafter.

Now back to the exploded view of figure 2, the stator part 105 of the grinding device 100 also comprises a second monolithic body 190, hereinafter referred to as "counter-grinder" for the sake of simplicity, which mainly comprises a tubular bushing 195 which extends around a central axis B and whose inner surface defines a grinding cavity 200 of the through type (i.e. substantially obtained as a duct open on both opposite sides).

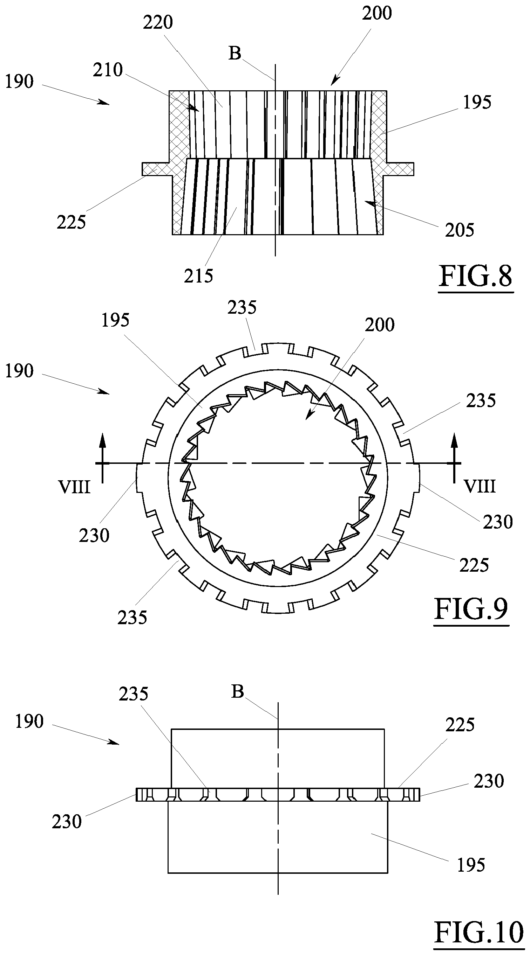

As illustrated in figure 8, the grinding cavity 200 is roughened by a plurality of teeth or projecting ribs, which may longitudinally extend substantially parallel to the central axis B while they may radially extend with a substantially sharp pointed shape.

In particular, the grinding cavity 200 may be divided into two annular portions mutually coaxial and arranged in succession, one being a first portion 205 that can be slightly frusto-conical and the other being a second substantially cylindrical portion 210.

At the first portion 205, the inner surface of the tubular bushing 195 comprises a first series of teeth or projecting ribs 215, while at the second portion 210, the inner surface of the tubular bushing 195 comprises a second series of teeth or projecting ribs 220, where the pitch and height of the teeth or ribs of the second series 220 can be smaller with respect to the pitch and height of the teeth or ribs of the first series 215.

The counter-grinder 190 further comprises an annular plate 225, which radially projects from the outer surface of the tubular bushing 195 moving away from the central axis B.

The annular plate 225 lies on a plane orthogonal to the central axis B and it can be arranged substantially half-way the axial extension of the tubular bushing 195.

The thickness of the annular plate 225 is much smaller than the axial extension of the tubular bushing 195 and it is substantially equal to the height (i.e. to the axial extension) of the annular rib 145 obtained in the inner surface of the supporting body 115.

In addition, the outer diameter of the annular plate 225 is substantially equal or slightly smaller than the inner diameter of said annular rib 145 and greater than the inner diameter of the annular abutment 130.

In diametrically opposite points of the annular plate 225, the counter grinder 190 comprises two notches 230 radially projecting from the lateral edge of the annular plate 225 moving away from the central axis B, and whose free ends are mutually spaced from each other by a distance substantially equal, or substantially smaller, than the inner diameter of the cylindrical portion 125 of the supporting body 115, i.e. the maximum distance between the two longitudinal grooves 155 that interrupt the annular rib 145.

The width, i.e. the angular extension, of these two projecting notches 230 is also substantially equal or slightly smaller than the width of the two longitudinal grooves 155.

On the perimeter edge of the annular plate 225, in cases where the projecting notches 230 are provided, there are further obtained two groups of longitudinal grooves 235 axially extending over the entire thickness of the annular plate 225.

The longitudinal grooves 235 of each group are distributed around the central axis B so as to be substantially mutually separated by the same angular distance that separates the peduncles 160 of the supporting body 115.

From another point of view, the longitudinal grooves 235 divide the perimeter edge of the annular plate 225 into a plurality of teeth all of which having the same outer diameter, and thus the notches 230 may be considered to be two radial appendages radially projecting from two diametrically opposite teeth of the annular plate 225.

The longitudinal grooves 235 may have a tapered shape in the longitudinal direction which substantially corresponds, inversely, to the tapered shape of the peduncles 160.

In this manner, the counter grinder 190 may be coaxially inserted into the supporting body 115, but still making sure that the second portion 210 of the tubular bushing 195 is directed towards the annular edge 140 of the supporting body 115.

As long as the projecting notches 230 of the annular plate 225 are not aligned with the longitudinal grooves 155, the projecting notches 230 rest against the longitudinal ribs 150 and/or the annular rib 145, thus enabling to rotate the counter grinder 190 (possibly in an automated manner) until the correct alignment is attained.

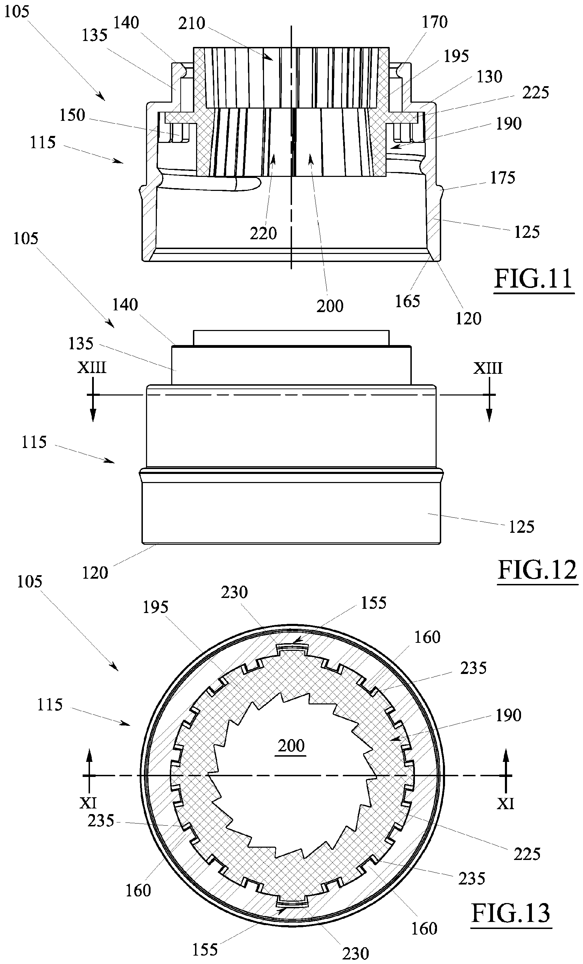

The counter grinder 190 may be deeply inserted into the supporting body 115 to reach the final position illustrated in figures 11 to 14 only when the projecting notches 230 of the annular plate 225 are aligned with the longitudinal grooves 155.

Thanks to this insertion movement, the annular plate 225 of the counter grinder 190 is inserted substantially fittingly into the grooved seat defined by the annular rib 145 and by the peduncles 160, resting against the annular abutment 130 and engaging the peduncles 160 in the longitudinal grooves 235.

In this manner, the coupling between the longitudinal grooves 235 and the peduncles 160 obtains a prismatic coupling that rotatably constrains the counter grinder 190 to the supporting body 115.

It should be observed that the axial locking of the annular plate 225 in the aforementioned seat may be obtained, besides by the annular abutment 130, also by means of one or more minute notches (not visible in the figures) radially projecting from one or more corresponding longitudinal ribs 150, they are positioned in the axial direction immediately close to the annular rib 145, and they project at least slightly into the perimeter of the grooved seat defined by the annular rib 145, so as to enable the forced insertion of the annular plate 225 as well as resist to the slipping off thereof.

Alternatively, the slipping off of the annular plate 225 may be prevented or at least countered by providing a coupling with interference between the longitudinal grooves 235 of the annular plate 225 and the peduncles 160 of the supporting body 115.

Furthermore, it should be observed that the outer diameter of the tubular bushing 195 of the counter grinder 190 is smaller than the inner diameter of the annular rib 170 arranged at the annular edge 140 of the supporting body 115 so that, in the final position, the second portion 210 of the tubular bushing 195 may partly project in the axial direction outside the annular edge 140, thus also being separated from the annular rib 170 by a relatively large interspace.

Once the counter grinder 190 is assembled in the supporting body 115, the latter is fastened to the outlet mouth 905 of the container 900 as previously described, thus integrally joining the stator part 105 of the grinding device 100 to the container 900 (see fig. 15).

Should the connection between the supporting body 115 and the outlet mouth 905 not be of the threaded type, but simply of the snap-coupling type that constrains them axially, the counter grinder 190 could comprise two further notches (not illustrated) which, projecting from the surface of the annular plate 225 that is faced towards the first portion 205 of the tubular bushing 195, are suitable to be inserted into corresponding recesses obtained on the edge 910 of the outlet mouth 905, obtaining a rotary constraint that rotatably integrally joins the counter grinder 190 (and thus the entire stator part 105) to the container 900.

Once again, back to the exploded view of figure 2, the rotor part 110 of the grinding device 100 in turn comprises a first monolithic manoeuvre body 240, which is suitable to be rotatably coupled to the supporting body 115 of the stator part 105.

The manoeuvre body 240 mainly comprises a cylindrical external shell 245 which extends around a central axis C.

The inner diameter of the cylindrical shell 245 is substantially equal, or slightly greater, than the outer diameter of the section of the supporting body 115 comprised between the annular rib 175 and the cylindrical portion 135.

The outer lateral surface of the cylindrical shell 245 may be convex and it can be engraved by a plurality of longitudinal grooves that facilitate the gripping thereof by the user.

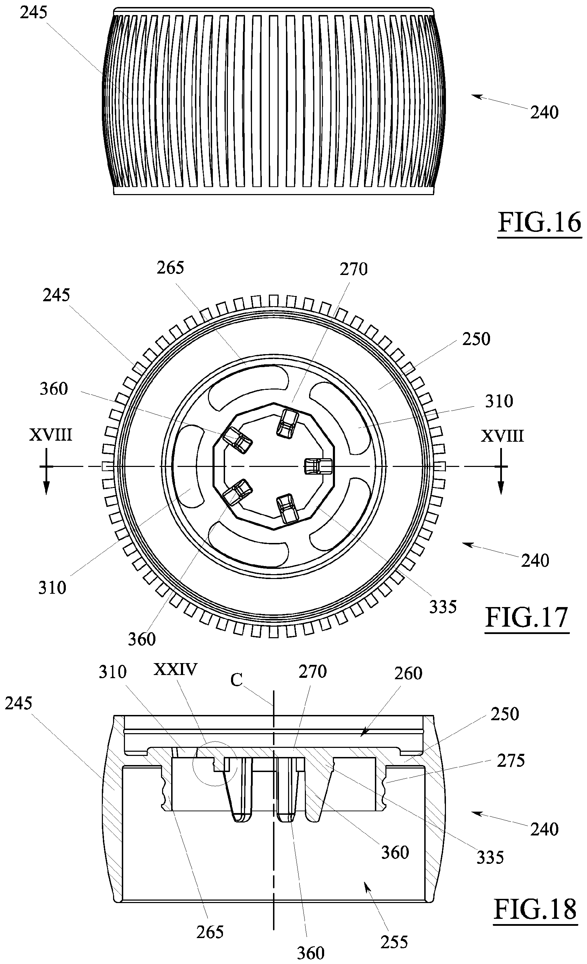

As illustrated in figure 18, the manoeuvre body 240 may further comprise a transversal plate 250, which is arranged inside the cylindrical shell 245 where it is directed orthogonally with respect to the central axis C.

In particular, the transversal plate 250 is axially positioned in an intermediate position along the axial extension of the cylindrical shell 245, dividing the internal cavity thereof into two separate chambers, a first chamber 255 and a second chamber 260.

The manoeuvre body 240 further comprises a cylindrical shank 265, which projects from the transversal plate 250 towards the internal of the first chamber 255, extending coaxially to the cylindrical shell 245 and defining an annular interspace with the latter.

The cylindrical shank 265 also delimits a central portion 270 of the transversal plate 250, which projects into the second chamber 260 with slight relief.

The inner diameter of the cylindrical shank 265 is substantially equal or slightly greater than the outer diameter of the tubular bushing 195 of the counter grinder 190, while the outer diameter thereof is substantially equal or slightly smaller than the inner diameter of the cylindrical portion 135 of the supporting body 115.

The outer surface of the cylindrical shank 265 also has at least one coaxial annular groove 275 having a shape matching with the shape of the annular rib 170 of the supporting body 115.

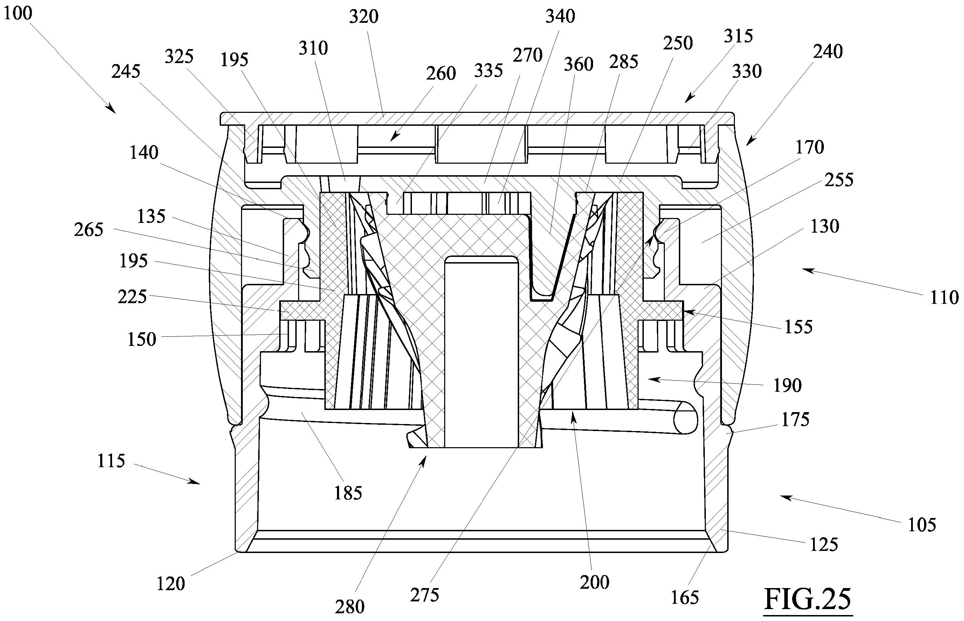

In particular, the axial distance between the annular groove 275 and the transversal plate 250 is substantially equal to the distance between the annular rib 170 and the projecting free end of the tubular bushing 195 of the counter grinder 190 (see fig. 25).

Thanks to this configuration, the supporting body 115 of the stator part 105 may be fitted coaxially and substantially fittingly into the first chamber 255 of the rotor part 110.

During this insertion, the cylindrical shank 265 is progressively inserted into the annular interspace defined between the cylindrical portion 135 of the supporting body 115 and the tubular bushing 195 of the counter grinder 190, until the annular groove 275 obtains a snap-coupling connection with the annular rib 170, mutually axially constraining the manoeuvre body 240 of the rotor part 110 to the supporting body 115 of the stator part 105, but enabling free rotations of the manoeuvre body around the central axis C.

Upon attaining this connection, the central part 270 of the transversal plate 250 is also faced and at contact with the projecting edge of the tubular bushing 195 of the counter grinder 190, thus closing the end of the grinding cavity 200 and thus preventing the unrestricted exit of the products contained in the container 900.

Simultaneously, the lower edge of the cylindrical shell 245 may be positioned substantially abutting against the annular rib 175 of the supporting body 115. Now, once again back to the exploded view of figure 2, the rotor part 110 of the grinding device 100 further comprises a second monolithic body 280, hereinafter simply referred to as "grinding body" for the sake of simplicity, which is fixed to the central portion 270 of the transversal plate 250 and projects into the first chamber 255, so as to be coaxially inserted into the grinding cavity 200 of the counter grinder 190.

In the illustrated example, the grinding body 280 is substantially conical or frusto-conical shaped having a larger base 285 and a longitudinal axis D. This grinding body 280 is arranged coaxial to the cylindrical shell 245 and it is directed so that the larger base 285 thereof rests against the central portion 270 of the transversal plate 250.

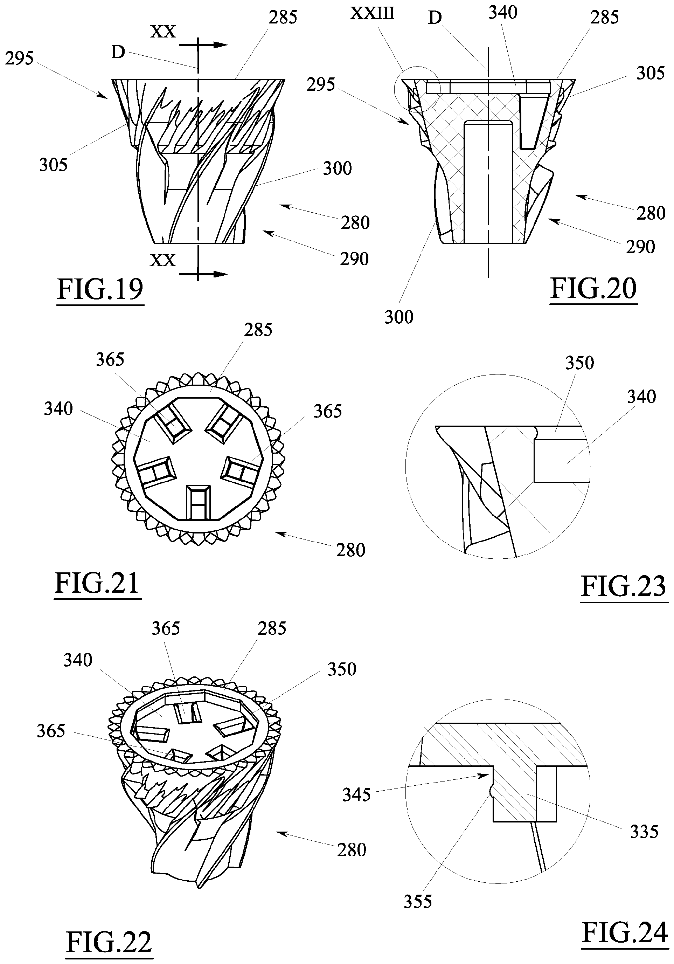

As illustrated in figures 19 and 20, the outer lateral surface of the grinding body 280 is roughened by a plurality of teeth or projecting ribs, which may longitudinally extend substantially parallel to the generatrices of the cone while they may radially extend with a substantially sharp pointed shape.

In particular, the outer surface of the grinding body 280 may be divided into two annular portions mutually coaxial and arranged in succession, a first portion 290 and a second portion 295.

At the first portion 290, the outer surface of the grinding body 280 comprises a first series of teeth or projecting ribs 300, while at the second portion 295, the outer surface of the grinding body 280 comprises a second series of teeth or projecting ribs 305, where the pitch and height of the teeth or ribs of the second series 305 can be smaller with respect to the pitch and height of the teeth or ribs of the first series 300.

In this manner, following the rotation of the rotor part 110 with respect to the stator part 105, the first series of teeth or projecting ribs 300 of the grinding body 280 is suitable to cooperate with the first series of teeth or projecting ribs 215 of the counter grinder 190, to firmly grip the granules of the products to be ground, while the second series of teeth or projecting ribs 305 of the grinding body 280 is suitable to cooperate with the second series of teeth or projecting ribs 220 of the counter grinder 190, for the fine crushing of grains up to obtaining fragments of the desired grain size.

However, it is should be observed that the roughened inner surfaces of the counter grinder 190 and the roughened outer surfaces of the grinding body 280 are never at contact with each other, but separated by a narrow annular interspace which allows the ground product to pass through.

In order to enable the release of the ground product, the rotor part 110 of the grinding device 100 is thus provided with a plurality of through openings 310, which are obtained in the central portion 270 of the transversal plate 250, so as to project into the aforementioned interspace, placing it in communication with the second chamber 260 of the manoeuvre body 240.

As illustrated in the exploded view of figure 2, the rotor part 110 of the grinding device 100 is lastly provided with a third monolithic body 315, which will simply be referred to as "cap" hereinafter, which comprises a plate 320 suitable to be applied to the upper edge of the cylindrical shell 245 of the manoeuvre body 240 to close the second chamber 260.

In particular, the cap 315 comprises a plurality of projecting notches 325, which derive from the plate 320 and are suitable to obtain a snap-coupling with an annular groove 330 coaxially obtained in the inner surface of the second chamber 260 (see fig. 25).

During use, should small amounts of ground product inadvertently penetrate between the inner surface of the cylindrical shell 245 and the outer surface of the cylindrical portion 125 of the supporting body 115, said small amounts could prevent or at least hinder the rotation of the rotor part 110.

In order to overcome this potential disadvantage, the supporting body 115 of the stator part 105 may be modified as provided for in the embodiment of figure 26.

According to the embodiment illustrated in figure 26, the supporting body 115 is entirely identical to the one described previously, save for the fact that, in the section comprised between this annular rib 175 and the annular abutment 130, the outer surface of the cylindrical portion 125 may be engraved by a plurality of longitudinal grooves 180, which extend parallel to the central axis A over the entire height of the section.

In this manner, any small amounts of ground product inadvertently penetrating between the inner surface of the cylindrical shell 245 and the outer surface of the cylindrical portion 125, can be collected in the longitudinal grooves 180, without causing friction such to hinder the rotation of the cylindrical shell 245.

Though the longitudinal grooves 180 are obtained in the outer surface of the cylindrical portion 125, it cannot be ruled out that in other embodiments such longitudinal grooves can be obtained in the inner surface of the cylindrical shell 245.

Nevertheless, in order for the grinding device 100 described above to operate efficiently, the grinding body 280 has to be joined to the transversal plate 250 so as to be completely integrally joined thereto, i.e. constrained axially, transversely and with respect to the rotations, and so that the joining is stable, i.e. the parts cannot mutually separate due to the forces they are subjected to in use.

In the embodiment herein illustrated, the joining between the grinding body 280 and the transversal plate 250 is preferably obtained by means of a coupling connection.

In order to obtain this coupling connection, the manoeuvre body 240 may firstly comprise a prismatic element 335 (see figs. 17 and 18) which projects cantilevered from the central portion 270 of the transversal plate 250 and extends into the first chamber 255 with a longitudinal axis coinciding with the central axis C.

This prismatic element 335 may have a polygonal perimeter shape, decagonal shape in this case, and it may be obtained as a rib projecting cantilevered from the central portion 270 of the transversal plate 250 delimiting an inner cavity.

Correspondingly, the grinding body 280 may comprise a prismatic cavity 340 (see figs. 20-22), which is obtained at the centre of the larger base 285 and it has a shape matching that of the prismatic element 335, a decagonal-shaped cavity in this case.

In this manner, the prismatic cavity 340 is suitable to insertingly receive the prismatic element 335, obtaining - with the latter - a prismatic coupling which constrains the grinding body 280 to the transversal plate 250 both with respect to the transversal displacements and rotation.

Though the prismatic element 335 is obtained in the transversal plate 250 and the prismatic cavity 340 in the grinding body 280, it cannot be ruled out that in other embodiments the prismatic element 335 can - vice versa - be obtained in the grinding body 280 and the prismatic cavity 340 can be obtained in the transversal plate 250.

As illustrated in the details of figures 23 and 24, the coupling connection may also comprise an annular groove 345 obtained in the outer lateral surface of the prismatic element 335 and extending around the central axis C, and at least one annular rib 350 obtained in the inner lateral surface of the prismatic cavity 340, also extending around the central axis C and radially projecting towards the internal.

Obliviously, the annular groove 345 and the annular rib 350 will not have a circular but prismatic extension following the shape of the prismatic element 335 and the corresponding prismatic cavity 340.

In the illustrated example, the annular groove 345 is defined between the central portion 270 of the transversal plate 250 and an annular rib 355 which projects radially from the outer surface of the prismatic element 335, while the annular rib 350 is obtained substantially at the inlet of the prismatic cavity 340.

In this manner, while the prismatic element 335 is inserted into the prismatic cavity 340, the annular rib 350 can be forced to overcome the annular rib 355 and be snap-engaged in the annular groove 345, obtaining - with the latter - a shape coupling that axially constrains the grinding body 280 to the transversal plate 250.

Though the annular groove 345 and the annular rib 350 are continuous elements, it cannot be ruled out that in other embodiments the same elements can be interrupted and thus obtained as a plurality of discontinuous portions. For example, the annular rib 350 could be replaced by a plurality of notches which, projecting from the inner surface of the prismatic cavity 340, lie on the same plane orthogonal to the central axis C and are circumferentially distributed around it.

Correspondingly, the annular groove 345 could be replaced by a plurality of engravings which, obtained on the outer surface of the prismatic element 335, lie on the same plane orthogonal to the central axis C and are circumferentially distributed around it.

Furthermore, even though the annular groove 345 is obtained in the prismatic element 335 and the annular rib 350 in the prismatic cavity 340, it cannot be ruled out that in other embodiments the annular groove 345 can - vice versa - be obtained in the prismatic cavity 340 and the annular rib 350 in the prismatic element 335.

Despite the coupling described above being per se capable of totally constraining the grinding body 280 to then transversal plate 250, that lateral forces that act - in use - on the grinding body 280 cause flexural stresses thereon that could cause the detachment thereof.

In order to overcome this potential disadvantage, the coupling connection could further comprise a plurality of appendages 360 (see figs. 17 and 18) projecting cantilevered from the central portion 270 of the transversal plate 250 towards the internal of the first chamber 255, the appendages being preferably identical to each other and suitable to be fitted into respective slits 365 (see figs. 20-22), which are obtained at the centre of the larger base 285 of the grinding body 280 and which longitudinally extend into the latter, where they preferably have the same shape - inversely - as the appendages 360. More in detail, the appendages 360 are spaced from the central axis C, in this case they can be arranged circumferentially around the central axis C, all separate from the latter by the same distance and equally spaced from each other.

In particular, the appendages 360 may be radially contained in the outer perimeter of the prismatic element 335 and project longitudinally with respect thereto.

The embodiment illustrated herein for example provides for five appendages 360, each of which is positioned at the centre of a respective side of the prismatic element 335.

The appendages 360 may have a tapered shape, larger at the base for coupling to the central portion 270 of the transversal plate 250 and progressively narrower towards the free end.

The height of the appendages 360, i.e. the distance between the base for coupling to the central portion 270 of the transversal plate 250 and the free end, is preferably greater than a third of the total height of the grinding body 280, i.e. the axial dimension thereof.

In this manner, by coupling the grinding body 280 to the transversal plate 250, the appendages 360 are fitted into the respective slits 365 so that, upon obtaining the coupling between the prismatic element 335 and the prismatic cavity 340, the appendages 360 are deeply anchored into the grinding body 280, thus hindering or reducing chances of the latter separating from the transversal plate 250 due to the flexural stresses it is subjected to in use. Thanks to the construction solution outlined above, though made up of five elements to be assembled, the grinding device 100, may be globally less expensive with respect to grinding devices of the prior art, in that the supporting body 115 of the stator part 105, the manoeuvre body 240 of the rotor part 110 and the cap 315 can be made of different material with respect to the grinding body 280 and the counter grinder 190.

In particular, while the grinding body 280 and the counter grinder 190 can be made of rather rigid and generally expensive plastic material, for example Acetal Resin (POM), the supporting body 115, the manoeuvre body 240 and the cap 315 may be made of a plastic material having lower mechanical characteristics and thus less expensive, such as for example polypropylene (PP).

Obviously, the grinding device 100, as described above, may be subjected - by a man skilled in the art - to numerous technical/application modifications, without departing from the scope of protection of the invention as claimed below.

## Claims

1. A grinding device (100) comprising:
- a stator part (105) comprising a grinding cavity (200),
- a rotor part (110) rotatably coupled to the stator part (105) according to a rotation axis (A) coinciding with a central axis (B) of said grinding cavity (200) and comprising a grinding body (280) axially inserted into said grinding cavity (200),
wherein the stator part (105) comprises:
- an external shell (115) provided with means for connecting to the mouth (905) of a container (900), and
- an internal bushing (195) defining the grinding cavity (200), which is obtained in a separate body with respect to the external shell (115) and is coupled to the external shell (115) by means of a connection which reciprocally constrains them at least in rotation,
wherein said connection comprises:
- a grooved ring (225) made in a single body with the internal bushing (195) and extending about a central axis (B) coinciding with the rotation axis (A), and
- a corresponding grooved seat obtained in the external shell (115) and in which said grooved ring (225) is axially inserted to obtain, together with said grooved seat, a prismatic coupling,
wherein said external shell (115) comprises an annular abutment (130) which delimits an end of said grooved seat (130) and which serves as an axial abutment for the grooved ring (225),
wherein said grooved seat is delimited by an annular rib (145) which projects coaxially from the annular abutment (130) and by a plurality of peduncles (160) which project radially from said annular rib (145) towards the central axis (B).

2. A device (100) according to claim 1, wherein said grooved ring (225) has an axial extension which is smaller than the axial extension of the internal bushing (195) with respect to which it radially projects towards the external.

3. A device (100) according to any one of the preceding claims, wherein said external shell (115) comprises at least one tooth which projects radially within the perimeter of the grooved seat, axially blocking the grooved ring (225) against the annular abutment (230).

4. A device (100) according to any one of the preceding claims, wherein the grooved ring (225) comprises at least one radial appendage (230) which projects radially from one of the teeth of the grooved ring and which is engaged in a corresponding radial recess (155) obtained along one of the grooves of the grooved seat.

5. A device (100) according to claim 4, wherein the grooved ring (225) comprises a pair of said radial appendages (230) arranged on diametrically opposite sides with respect to the central axis (B).

6. A device (100) according to any one of the preceding claims, wherein the external shell (115) comprises a plurality of longitudinal ribs (150) which project from the annular rib (145) and extend parallel to the central axis (B), said longitudinal ribs (150) being distributed about the central axis (B) angularly equally spaced from each other.

7. A device (100) according to claim 6, wherein said longitudinal ribs (150) are angularly offset with respect to the peduncles (160) of the grooved seat (130).

8. A device (100) according to any one of the preceding claims, wherein the internal bushing (195) is made of a different material with respect to the external shell (115).
